# EUROPEAN PATENT APPLICATION

(11) **EP 4 523 509 A1**
(43) Date of publication of application: **19.03.2025**
(21) Application number: 24812053.7
(22) Date of filing: 25.07.2024
(51) Int. Cl.: A01B 79/00, G06T 17/05, G06T 17/20

(54) **LEVELING METHOD FOR AUTOMATICALLY SETTING AND ADJUSTING REFERENCE HEIGHT**

(30) Priority: 26.07.2023 CN 202310923292
(71) Applicant: Shanghai Allynav Technology Co. Ltd., Shanghai 201702 (CN)
(72) Inventor: QIN, Zhenfeng, Shanghai 201702 (CN); LI, Xiaoyu, Shanghai 201702 (CN); WANG, Rui, Shanghai 201702 (CN)
(74) Representative: Ipside
(86) International application number: PCT/CN2024/107488
(87) International publication number: WO 2025/021137

(57) **Abstract**

This invention discloses a leveling method with automatic setting and adjustment of the baseline height. This invention can reduce the technical requirements for machine operators; decrease the number of baseline adjustments, improve baseline adjustment accuracy, and enhance operation efficiency and quality; allow for night operations without visual limitations as the system automatically adjusts the baseline; automatically determine if a plot is leveled, eliminating the need for operators to frequently look back to check leveling effects and progress; display different colors for leveled areas of the plot to guide operators to working areas, eliminating the need to drive around the entire plot; through the use of an automatic adjustment method for the leveling baseline elevation, it can automatically adjust the height of the leveling baseline according to the adjustment parameters set based on the load capacity of the operating machinery, avoiding the phenomenon of low work efficiency caused by repeated baseline adjustments, while also reducing the skill requirements for operators, allowing them to focus more on driving the operating vehicle.

## Description

### Technical Field

This invention relates to the field of land leveling operations, specifically a leveling method with automatic setting and adjustment of the baseline height.

### Background Technology

Land leveling is a crucial project in land utilization engineering. The leveling of field plots has beneficial effects on soil conservation, fertilizer retention, water conservation, alkali prevention and seedling protection, mechanized farming, and irrigation water conservation. Land leveling project planning is constrained by the topography, soil, and natural factors of the project area. Different natural characteristics and land use conditions lead to different planning focuses, so it is necessary to adapt to local conditions. For example, in plain areas with little topographic relief, the scale of land leveling is relatively large; while for low-lying areas prone to waterlogging, considering drainage needs, the scale of land leveling can be slightly smaller.

During land leveling, due to varying sizes of operation areas and different terrain elevations, it is difficult to accurately determine the leveling baseline for the operation area. It is often necessary to first collect elevation data within the leveling area, and then the system calculates a relatively accurate leveling baseline (baseline height) for the operation area based on the collected data. If there are significant elevation differences in the leveling operation area, multiple manual adjustments of the leveling baseline height are required during automatic leveling operations. When adjusting the baseline, it is often difficult to determine the appropriate adjustment size based on the operator's visual estimation or experience, which may result in multiple unsuitable adjustments and failure to achieve efficient leveling.

### Summary of the Invention

The objective of this invention is to provide a leveling method with automatic setting and adjustment of the baseline height to solve the problems mentioned in the background technology above.

To solve the above technical problems, this invention provides the following technical solution: A leveling method with automatic setting and adjustment of the baseline height, including the following steps:
(1) collect elevation data of the operation plot through the system's satellite positioning function, or use elevation data collected by third-party equipment;
(2) the system generates an elevation heatmap based on the elevation data and system-set parameters, and then performs grid processing on the generated heatmap, with grid size based on system-set parameters;
(3) generate leveling baseline and other data based on the parameters set in step (2);
(4) record all gridded data, including but not limited to grid coordinates and elevations;
(5) based on the system-set parameters for automatic baseline adjustment, determine if the current baseline meets the conditions for automatic adjustment. If not, use the leveling baseline generated in step (3) for leveling. If it does, the system automatically adjusts the temporary leveling baseline for the current operation;
(6) during the leveling process, determine if precise leveling has been completed under the current baseline (temporary leveling baseline or leveling baseline). If precise leveling is completed under the temporary leveling baseline, the system automatically adjusts to the next temporary leveling baseline. If it's the leveling baseline, the system indicates that precise leveling of the plot is complete;
(7) when the system automatically adjusts to the last temporary leveling baseline, the next adjustment will be to the leveling baseline.

Further, in step (1), use the satellite land leveling system to drive along the following recommended path within the plot requiring precise leveling to collect elevation data for the current plot.

First, drive around the edge of the plot once, then drive in an S-shape pattern within the operation area while the system collects data. Collect data at a frequency of 10 Hz or 20 Hz. After collection, the coordinate data for n points is recorded as set S0={( X₁,Y₁,H₁), (X₂,Y₂,H₂), ... (Xₙ,Yₙ,Hₙ)}; where Xₙ represents the longitude of the n-th point, Yₙ represents the latitude of the n-th point, and Hₙ represents the elevation of the n-th point.

Further, in step (2), set the parameters related to automatic baseline adjustment:
Grid size: W; after the device generates a heatmap, divide the heatmap into areas with a grid size of W*W, where W is in meters, displaying and calculating data in grid form;
Data includes the coordinates of the 4 vertices and the center point of each square grid;
Randomly collect three-dimensional spatial point coordinates within the plot; Based on the collected point coordinates and the set plot grid data, perform interpolation calculation to generate a set of spatial point coordinates for the set grid size; The newly generated point coordinates are the grid center point coordinates; Calculate the coordinates of the 4 vertices of the grid corresponding to the grid center point coordinates; (Used to calculate whether the path of the operating machine has passed through this grid); The order of the set of 4 vertex coordinates of the grid is consistent with the order of the grid center point coordinates, facilitating quicker viewing of the area covered by the operating machine passing through this grid;
Leveling baseline: The leveling baseline or temporary baseline is an elevation parameter for real-time comparison during leveling operations;
Automatic baseline adjustment value: h; indicates that the system adjusts the baseline downward by h centimeters each time;
Leveling completion judgment percentage: p; represents the percentage of grid points meeting the conditions compared to all grid points currently being compared;
Baseline verification time: T; indicates that every T minutes, recalculate the elevation of all points in the current time point set S1, and calculate the verified baseline height value Ht;
Grid percentage judgment: Q; represents the ratio of the area covered by the current operation system within this grid to the total grid area. When the percentage is greater than or equal to Q, the system determines that it has passed through this grid; otherwise, it determines that it has not passed through this grid;
During operation, install the satellite positioning device at the center of the operating machine and input the width of the operating machine; Based on satellite positioning data and travel heading, the trajectory of the operating machine can be calculated in real-time (over a certain time period); Calculate the grids passed through based on the trajectory coordinates; Calculate the area covered when passing through the grid; The ratio of this area to the grid area is the grid percentage, which is compared with Q.

Further, based on set S0, and using interpolation algorithms, generate a new set of points S1= {( X₁,Y₁,H₁), (X₂,Y₂,H₂), ··· (Xₘ,Yₘ,Hₘ)} for a heatmap with grid size W*W; Xₘ represents the longitude of the center of the m-th grid point, Yₘ represents the latitude of the center of the m-th grid point, and Hₘ represents the elevation of the center of the m-th grid point;
For horizontal leveling: the highest elevation is Hₘₐₓ, the lowest elevation is Hₘᵢₙ, and based on set S1, calculate the average elevation value as the baseline height, set as H; Use the irregular triangular network (TIN) model to calculate the fill volume P0 and excavation volume P1;
Based on the generated horizontal baseline height, calculate the difference between H₁, H₂, ..., Hₘ in the current set S1 and the baseline height H, divide the differences into different intervals, display with different colors, and generate an elevation heatmap; display the detailed distribution of high and low terrain (fill and excavation) for the current plot.

Further, in step (3), based on the set automatic baseline adjustment value h, the system determines whether to adjust the baseline downward;
When Hₘₐₓ-h<_H, the system does not need to automatically adjust the baseline height, and uses the current baseline height H as the operation baseline height;
When Hₘₐₓ-h>H, the system automatically adjusts the baseline height;
The baseline height is H, set the temporary baseline as ΔHᵢ = Hₘₐₓ - h × i, where i is the i-th automatic baseline adjustment, for the first baseline adjustment, i=1, i ≤[ (Hₘₐₓ - H) / h], i is an integer value; (The i value in ΔSᵢ below refers to the i value here).

Further, during horizontal leveling, the principle of adjusting the baseline height is to increase or decrease the baseline height H value.

Further, in step (4), after the ith automatic baseline adjustment, set the temporary baseline height as ΔHᵢ, and output the temporary operation heatmap under the temporary baseline:
Calculate the difference between all elevation data H₁, H₂, ..., Hₘ in the current grid map point set S1= {( X₁,Y₁,H₁), (X₂,Y₂,H₂), ··· (Xₘ,Yₘ,Hₘ)} and the temporary baseline height ΔHᵢ, divide the differences into different intervals, and display with different colors;
The system redraws the heatmap based on the temporary baseline height ΔHᵢ; The distribution of high and low terrain prompts the machine operator to take soil from high areas and fill low areas during operation;
Calculate the temporary grid point set above the temporary baseline;
Within set S1, the set of grid point coordinates where all elevation data H1, H2, ... Hm minus the temporary baseline height ΔHᵢ is greater than or equal to 0 is denoted as ΔSᵢ, ΔSᵢ⊂S1, ΔSᵢ is a subset of S1.

Further, during system operation, real-time update of elevation values for grid points passed through in the plot being leveled:
The verified baseline height value Hₜ is initially equal to the baseline height H;
Determine whether the current operating system has passed through this grid area based on the system-set judgment condition Q;
When the operating system passes through any grid area within the plot, the system replaces the corresponding elevation in the original grid map point set S1 with the current leveled elevation and saves set S1; simultaneously update the data in set ΔSᵢ.

Furthermore, in step (6), determine whether the grid areas higher than the ΔHᵢ baseline in the current plot have completed leveling, and whether the system will automatically adjust to the next baseline;
During the leveling operation, real-time updates of the point set S1 are made, and the baseline height Hₜ is calculated and checked according to the baseline check time T set by the system;
The value of the checked baseline height Hₜ is equal to the average elevation within S1;
During the leveling operation, the system updates the data of S1 and ΔSᵢ in real-time, and simultaneously judges whether the grid point data above the current temporary baseline ΔHᵢ meets the judgment condition based on the leveling completion judgment percentage data p set by the system;
If the number of elevation points less than or equal to ΔHᵢ in the ΔSᵢ set divided by the total number of elevation points in the ΔSᵢ set is greater than or equal to p, the system determines that all grid areas above the temporary baseline ΔHᵢ have completed precise leveling work;
When Hₜ≤ΔHᵢ+1, the system adjusts the baseline downward, setting the baseline to ΔHᵢ+1; when adjusting the baseline, when i reaches its maximum value, i.e., i=[Hₘₐₓ-H/h], when i is an integer, the system performs the final baseline adjustment stage, ends the temporary adjustment mode, and sets the current baseline H to Hₜ;
When Hₜ>ΔHᵢ+1, the temporary adjustment mode ends, and the current baseline H is set to Hₜ;

In step (7), when the system enters the next automatic baseline adjustment leveling, it continues to cycle through from step (4); when the system baseline height is Hₜ, the system enters the final leveling operation state.

Furthermore, completion of the final leveling: When the percentage of points where the difference between all elevation data and the baseline height in step (2) is within the threshold range is greater than or equal to p, the plot leveling is completed.

Abnormal handling during leveling: During leveling, situations may occur where there is too much soil to move. This can be handled through an automatic soil unloading solution for overload.

Compared with existing technology, the beneficial effects achieved by this invention are as follows.
1. This invention can lower the technical requirements for machine operators; reduce the number of baseline adjustments, improve baseline adjustment accuracy, increase operational efficiency and quality; reduce the need for system operations, allowing more focus on operating agricultural machinery, enhancing operational safety, reducing the probability of danger, and decreasing the number of ground compressions; it can reduce damage to the ground, minimize machine travel, and save energy while reducing emissions; night operations are not affected by visibility issues as the system automatically adjusts the baseline; it can automatically determine if a plot is leveled, eliminating the need for operators to frequently look back to check leveling effects and progress, with different colors displaying leveled areas of the plot to guide the operator's work area, eliminating the need to drive around the entire plot; through the use of an automatic adjustment method for the leveling baseline height, this invention can automatically adjust the leveling baseline height according to the adjustment parameters set based on the machine's load capacity, avoiding the phenomenon of low work efficiency caused by repeated baseline adjustments and rework, while also reducing the skill requirements for operators, allowing them to focus more on driving the work vehicle.
2. During the leveling operation of the satellite land leveling system in this invention, the elevation of the ground after leveling can be detected in real-time. Using a grid-based approach, after generating an elevation heatmap, the heatmap is divided into grids of a set size. The system determines whether the current operating machine is within this grid (which can be judged by the percentage of the grid size occupied by the current operating machine) to decide whether to replace the original elevation of the grid with the current post-leveling elevation. All data participating in elevation calculations and comparisons with the baseline height H or the checked baseline height Hₜ have their differences calculated, and the threshold participates in all calculations during comparison.

### Brief Description of Figures

The figures are used to provide a further understanding of this invention and form a part of the specification. They are used to explain the invention along with the embodiments and do not constitute a limitation of this invention. In the figures:

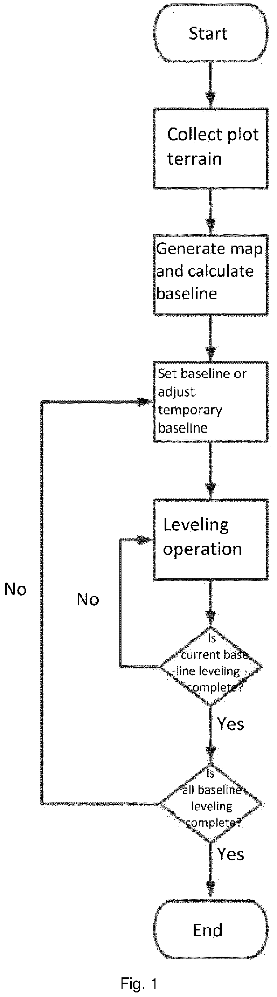

Figure 1 is the operational flow chart of this invention.

### Detailed Description of Embodiments

The following will clearly and completely describe the technical solutions in the embodiments of this invention in conjunction with the figures in the embodiments. Obviously, the described embodiments are only a part of the embodiments of this invention, not all of them. Based on the embodiments in this invention, all other embodiments obtained by ordinary technicians in the field without creative labor are within the scope of protection of this invention.

As shown in Figure 1, a leveling method with automatic setting and adjustment of the baseline height includes the following steps:
(1) Collect high and low terrain data of the operation plot through the system's satellite positioning function: Use the satellite land leveling system to drive along the following recommended path within the plot requiring precise leveling to collect the current plot's elevation data;
   First, drive around the plot's perimeter once, then follow an S-shaped path within the operation plot while the system collects data; data is collected at a frequency of 10 Hz or 20 Hz, and the n coordinate data points collected are recorded as set S0={( X₁,Y₁,H₁), (X₂,Y₂,H₂), ··· (Xₙ,Yₙ,Hₙ)}; Xₙ represents the longitude of the nth point, Yₙ represents the latitude of the nth point, and Hₙ represents the elevation of the nth point;
(2) The system generates an elevation heatmap based on the high and low terrain data and system-set parameters, and then processes the generated heatmap into a grid:
   Set parameters related to automatic baseline adjustment;
   Grid size: W; After the device generates the heatmap, it divides the heatmap into areas with a grid size of W*W, where W is in meters, displaying and calculating data in grid form; data includes the coordinates of the 4 vertices of the square grid and the center point coordinates of the grid; randomly collect three-dimensional spatial point coordinates within the plot; perform interpolation calculations based on the collected point coordinates and the set plot grid data to generate a set of spatial point coordinates of the specified grid size; the newly generated point coordinates are the grid center point coordinates; calculate the coordinates of the 4 vertices of the corresponding grid based on the grid center point coordinates; (Used to calculate whether the trajectory of the operating machine has passed through this grid); the order of the set of 4 vertex coordinates of the grid is consistent with the order of the grid center point coordinates, facilitating faster viewing of the area covered by the operating machine passing through this grid; leveling baseline: the leveling baseline or temporary baseline is an elevation parameter for real-time comparison during leveling operations; the automatic baseline adjustment value is: h; indicating that the system adjusts the baseline downward by h centimeters each time; leveling completion judgment percentage: p; represents the percentage of grid points meeting the conditions compared to all grid points currently being compared; baseline check time: T; indicates that every T minutes, recalculate the elevation of all points in the current time point set S1, and calculate the checked baseline height value Hₜ; grid percentage judgment: Q; represents the ratio of the area covered by the current operating system within this grid to the grid area, when the percentage is greater than or equal to Q, the system determines it has passed through this grid, otherwise it is determined not to have passed through this grid; during operation, install the satellite positioning device at the center of the operating machine and input the width of the operating machine; based on satellite positioning data and travel heading, the trajectory of the operating machine can be calculated in real-time (over a certain time period); calculate the grids passed through based on the trajectory coordinates; calculate the area covered when passing through the grid; the ratio of this area to the grid area is the grid percentage, which is compared with Q;
   According to the parameters selected by the system settings, leveling parameters can be generated; Based on the set S0 and using interpolation algorithms, generate a new set of points S1= {( X₁,Y₁,H₁), (X₂,Y₂,H₂), ··· (Xₘ,Yₘ,Hₘ)} for the heatmap with grid size W*W; Xₘ represents the longitude of the center of the m-th grid point, Yₘ represents the latitude of the center of the m-th grid point, and Hₘ represents the elevation of the center of the m-th grid point; For leveling: The highest elevation is Hₘₐₓ, the lowest elevation is Hₘᵢₙ, and based on set S1, calculate the average elevation value as the baseline height, set as H; Use the irregular triangular network (TIN) model to calculate the fill volume P0 and excavation volume P1; Based on the generated leveling baseline height, calculate the difference between H₁, H₂, ..., Hₘ in the current set S1 and the baseline height H; Divide the differences into different intervals, display them in different colors, and generate an elevation heatmap; Display the detailed distribution of high and low terrain in the current plot;
(3) Generate the leveling baseline according to the parameters set in step (2): Based on the set automatic baseline adjustment value h, the system determines whether to adjust the baseline downward; When Hₘₐₓ-h≤H, the system does not need to automatically adjust the baseline height, and uses the current baseline height H as the operating baseline height; When Hₘₐₓ-h>H, the system automatically adjusts the baseline height; The baseline height is H, set the temporary baseline as ΔHᵢ=Hₘₐₓ-h×i, where i is the ith automatic baseline adjustment, for the first baseline adjustment, i=1, i≤[Hmax-H/h], i takes integer values; (The i value in ΔSᵢ below refers to the i value here); During leveling, the principle of adjusting the baseline height is to increase or decrease the baseline height H value;
(4) Record all gridded data, including coordinates and elevations: Set the temporary baseline height after each automatic baseline adjustment as ΔHᵢ, and output a temporary operation heatmap under the temporary baseline: Calculate the difference between all elevation data H₁, H₂, ... Hₘ in the current grid map point set S1= {( X₁,Y₁,H₁), (X₂,Y₂,H₂), ··· (Xₘ,Yₘ,Hₘ)} under the temporary baseline and the temporary baseline height ΔHᵢ. Divide the differences into different intervals and display them in different colors. The system redraws the heatmap based on the temporary baseline height ΔHᵢ. The elevation distribution prompts the operator to excavate from high areas and fill in low areas. Within set S1, the set of grid point coordinates where all elevation data H1, H2, ... Hm minus the temporary baseline height ΔHᵢ is greater than or equal to 0 is defined as ΔSᵢ, where ΔSᵢ⊂S1, ΔSᵢ is a subset of S1. During system operation, real-time updates of the leveled elevation values for grid points in the processed area are made: Verify that the initial baseline height value Hₜ equals the baseline height H value. Determine whether the current operating system has passed through this grid area based on the system's set judgment condition Q. When the operating system passes through any grid area within the plot, the system replaces the original elevation in the corresponding grid of set S1 with the current leveled elevation and saves set S1. Simultaneously update the data in set ΔSᵢ.
(5) Based on the system's set parameters for automatic baseline adjustment, determine whether the current baseline meets the criteria for automatic adjustment. If not, use the leveling baseline generated in step (3) for leveling. If it does meet the criteria, the system automatically adjusts the current temporary leveling baseline for the operation.
(6) Determine whether the grid areas above the ΔHᵢ baseline in the current plot have completed leveling, and whether the system should automatically adjust to the next baseline. During the leveling process, determine whether precise leveling has been completed under the current baseline (temporary leveling baseline or leveling baselin). If precise leveling is completed under a temporary leveling baseline, the system automatically adjusts the temporary leveling baseline to the next temporary leveling baseline. If it's the leveling baseline, the system indicates that precise leveling of the plot is complete: During leveling operations, through real-time updates of point set S1, calculate and verify the baseline height Hₜ according to the system's set baseline verification time T. The verified baseline height value Hₜ equals the average elevation within S1. During leveling operations, the system updates S1 and ΔSᵢ data in real-time, and simultaneously determines whether the current grid point data above the temporary baseline ΔHᵢ meets the judgment condition based on the system's set percentage data p for determining leveling completion. If the number of elevation points less than or equal to ΔHᵢ in the ΔSᵢ set divided by the total number of elevation points in the ΔSᵢ set is greater than or equal to p, the system determines that precise leveling work for all grid areas above ΔHᵢ is complete under the current temporary baseline ΔHᵢ. When Hₜ≤ΔHᵢ+1, the system adjusts the baseline downward, setting the baseline to ΔHᵢ+1. When adjusting the baseline, if i reaches its maximum value, i.e., i=[Hₘₐₓ-H/h] (where i is an integer), the system performs the final baseline adjustment stage, ends the temporary adjustment mode, and sets the current baseline H to Hₜ. When Hₜ>ΔHᵢ+1, the temporary adjustment mode ends, and the current baseline H is set to Hₜ.
(7) When the system automatically adjusts to the last temporary leveling baseline, the next adjustment will be to the leveling baseline: When the system enters the next automatic baseline adjustment leveling, it continues to cycle through the operations from step (4). When the system baseline height is Hₜ, the system enters the final leveling operation state. Completion of the final leveling: When the percentage of points where the difference between all elevation data in step (2) and the baseline height is within the threshold range is greater than or equal to p, plot leveling is complete.

The advantageous effects of this invention are as follows.

The satellite land leveling system in this invention can detect the elevation of the leveled ground in real-time during the leveling operation. Using a gridded approach, it generates a heatmap and divides it into grids of a set size. The system determines whether the current operating machinery is within a grid (which can be judged by the percentage of the grid occupied by the machinery) and decides whether to replace the original elevation of the grid with the current leveled elevation. All data involved in elevation calculations and comparisons with the baseline height H or the verified baseline height Hₜ participate in the threshold comparison calculations. This invention can lower the technical requirements for machine operators; reduce the number of baseline adjustments while improving adjustment precision, thus enhancing operational efficiency and quality; reduce the need for system operations, allowing operators to focus more on operating agricultural machinery, improving operational safety, reducing the risk of accidents, and minimizing ground compaction; reduce damage to the ground surface, decrease machine travel distance, and save energy while reducing emissions; enable night operations without visibility limitations through automatic baseline adjustments; automatically determine whether a plot is leveled, eliminating the need for operators to frequently look back to check leveling effects and progress; display different colors for leveled areas of the plot, guiding operators to work areas without needing to drive around the entire field; through the method of automatically adjusting the leveling baseline height, the system can automatically adjust the baseline height according to set parameters based on the machinery's load capacity, avoiding the inefficiency caused by repeated baseline adjustments and rework, while also reducing the skill requirements for operators, allowing them to focus more on driving the operating vehicle.

Finally, it should be noted that the above description is only a preferred embodiment of this invention and is not intended to limit the invention. Although the invention has been described in detail with reference to the preceding embodiments, for those skilled in the art, modifications can still be made to the technical solutions recorded in the preceding embodiments, or equivalent replacements can be made to some technical features. Any modifications, equivalent replacements,

## Claims

1. A leveling method with automatic setting and adjustment of baseline height, **characterized by** including the following steps:
(1) collecting elevation data of the working plot through the system's satellite positioning function, or using elevation data collected by third-party equipment;
(2) the system generates an elevation heatmap based on the elevation data and system-set parameters, and then performs grid processing on the generated heatmap;
(3) generating leveling baseline and other data according to the parameters set in step (2);
(4) recording all gridded data, including but not limited to grid coordinates and elevations;
(5) based on the system's set parameters for automatic baseline adjustment, determining whether the current baseline meets the conditions for automatic adjustment. If not, use the leveling baseline generated in step (3) for leveling; if yes, the system automatically adjusts the current temporary leveling baseline;
(6) during the leveling process, determining whether precise leveling is completed under the current baseline. If precise leveling is completed under the temporary leveling baseline, the system automatically adjusts to the next temporary leveling baseline; if it's the leveling baseline, the system indicates that precise leveling of the plot is completed;
(7) when the system automatically adjusts to the last temporary leveling baseline, the next adjustment will be to the leveling baseline.

2. The leveling method with automatic setting and adjustment of baseline height according to claim 1, **characterized in that**: in step (1), using the satellite land leveling system, drive along the following recommended path within the plot requiring precise leveling to collect elevation data of the current plot:
first, drive around the edge of the plot once, then drive in an S-shape pattern within the working plot while the system collects data; collect data at a frequency of 10 Hz or 20 Hz, and record the n coordinate data points collected as set S0={( X₁,Y₁,H₁), (X₂,Y₂,H₂), ··· (Xₙ,Yₙ,Hₙ)}; where Xₙ represents the longitude of the n-th point, Yₙ represents the latitude of the n-th point, and Hₙ represents the elevation of the n-th point.

3. The leveling method with automatic setting and adjustment of baseline height according to claim 2, **characterized in that**: in step (2), set the parameters related to automatic baseline adjustment:
grid size: W; after the device generates a heatmap, divide the heatmap into areas with a grid size of W*W, where W is in meters, display and calculate data in grid form;
data includes the coordinates of the 4 vertices of the square grid and the coordinates of the grid center point;
randomly collect three-dimensional spatial point coordinates within the plot; perform interpolation calculation based on the collected point coordinates and the set plot grid data to generate a set of spatial point coordinates of the set grid size; the newly generated point coordinates are the grid center point coordinates; calculate the coordinates of the 4 vertices of the grid corresponding to the grid center point coordinates based on the grid center point coordinates; (used to calculate whether the trajectory of the operating machinery has passed through this grid); the order of the set of coordinates for the 4 vertices of the grid is consistent with the order of the grid center point coordinates, facilitating faster viewing of the area covered by the operating machinery passing through this grid;
leveling baseline: The leveling baseline or temporary baseline is an elevation parameter for real-time comparison during leveling operations;
automatic baseline adjustment value: h; indicates that the system adjusts the baseline downward by h centimeters each time;
percentage for determining leveling completion: p; represents the percentage of the number of grid points meeting the conditions compared to the total number of grid points currently being compared;
baseline verification time: T; indicates that every T minutes, recalculate the elevation of all points in the current time point set S1, and calculate the verified baseline elevation value Hₜ;
grid percentage judgment: Q; represents the ratio of the area covered by the current operating system within this grid to the total grid area. When the percentage is greater than or equal to Q, the system determines that it has passed through this grid; otherwise, it determines that it has not passed through this grid;
during operation, install the satellite positioning device at the center of the operating machinery and input the width of the operating machinery; based on satellite positioning data and travel heading, calculate the trajectory of the operating machinery in real-time (over a certain time period); calculate the grids passed through based on the trajectory coordinates; calculate the area covered when passing through the grid; the ratio of this area to the grid area is the grid percentage, which is compared with Q.

4. The leveling method with automatic setting and adjustment of baseline height according to claim 3, **characterized in that**: parameters for generating horizontal leveling can be generated based on the system settings selected;
based on set S0, and using interpolation algorithms, generate a new set of points S1= {( X₁,Y₁,H₁), (X₂,Y₂,H₂), ··· (Xₘ,Yₘ,Hₘ)} for a heatmap with grid size W*W; where Xₘ represents the longitude of the center of the m-th grid point, Yₘ represents the latitude of the center of the m-th grid point, and Hₘ represents the elevation of the center of the m-th grid point;
for horizontal leveling: the highest elevation is Hₘₐₓ, the lowest elevation is Hₘᵢₙ, calculate the average elevation value as the baseline elevation H based on set S1; use the irregular triangular network (TIN) model to calculate the fill volume P0 and excavation volume P1;
based on the generated horizontal baseline elevation, calculate the difference between H₁, H₂, ···, Hₘ in the current set S1 and the baseline elevation H, divide the differences into different intervals, display them in different colors to generate an elevation heatmap; display the detailed elevation distribution of the current plot.

5. The leveling method with automatic setting and adjustment of baseline height according to claim 4, **characterized in that**: in step (3), the system determines whether to adjust the baseline downward based on the set automatic baseline adjustment value h;
When Hₘₐₓ - h ≤ H, the system does not need to automatically adjust the baseline height, using the current baseline height H as the working baseline height;
When Hₘₐₓ - h > H, the system automatically adjusts the baseline height;
the baseline height is H, set the temporary baseline as ΔHᵢ = Hₘₐₓ - h × i, where i is the i-th automatic baseline adjustment, for the first baseline adjustment, i = 1, i ≤[ (Hₘₐₓ - H) / h], i is an integer value.

6. The leveling method with automatic setting and adjustment of baseline height according to claim 5, **characterized in that**: during horizontal leveling, the principle of adjusting the baseline height is to increase or decrease the baseline height H value.

7. The leveling method with automatic setting and adjustment of baseline height according to claim 6, **characterized in that**: in step (4), after the i-th automatic baseline adjustment, the temporary baseline height is set as ΔHᵢ, outputting a temporary working heatmap under the temporary baseline:
calculate the difference between all elevation data H1, H₂, ... Hₘ in the current temporary baseline grid map point set S1={( X₁,Y₁,H₁), (X₂,Y₂,H₂), ··· (Xₘ,Yₘ,Hₘ)} and the temporary baseline height ΔHᵢ, divide the differences into different intervals, and display them in different colors;
the system redraws the heatmap based on the temporary baseline height ΔHᵢ; the elevation heatmap distribution guides the machine operator to excavate soil from high areas and fill low areas;
calculate the temporary grid point set above the temporary baseline;
within set S1, the set of grid point coordinates where the difference between all elevation data H₁, H₂, ... Hₘ and the temporary baseline height ΔHᵢ is greater than or equal to 0 is defined as ΔSᵢ, ΔSicS1, ΔSᵢ is a subset of S1.

8. The leveling method with automatic setting and adjustment of baseline height according to claim 7, **characterized in that**: during system operation, it real-time updates the elevation values of grid points in the plot where leveling work has been performed:
check that the baseline height value Hₜ is initially equal to the baseline height H value;
determine whether the current operating system has passed through this grid area, based on the system's set judgment condition Q;
when the operating system passes through any grid area within the plot, the system replaces the original elevation in the corresponding grid of set S1 with the current post-leveling elevation and
saves set S1; simultaneously update the data in set ΔSᵢ.

9. The leveling method with automatic setting and adjustment of baseline height according to claim 8, **characterized in that**: in step (6), determine whether the grid areas higher than the ΔHᵢ baseline in the current plot have completed leveling, and whether the system should automatically adjust to the next baseline;
during leveling operations, through real-time updates of point set S1, calculate and check the baseline height Hₜ according to the system's set baseline check time T;
for horizontal leveling, the checked baseline height value Hₜ equals the average elevation in S1; during leveling operations, the system real-time updates data in S1 and ΔSᵢ, and simultaneously determines whether the current grid point data above the temporary baseline ΔHᵢ meets the judgment condition based on the system's set leveling completion percentage data p;
if the number of elevation points less than or equal to ΔHᵢ in set ΔSᵢ divided by the total number of elevation points in set ΔSᵢ is greater than or equal to p, the system determines that precise leveling work for all grid areas above ΔHi is completed at the current temporary baseline ΔHᵢ; and when Hₜ≤ΔHᵢ+1, the system adjusts the baseline downward, with the baseline becoming ΔHᵢ+1; when adjusting the baseline, when i reaches its maximum value, i.e., i=[Hₘₐₓ-H/h], with i being an integer, the system performs the final baseline adjustment phase, ends the temporary adjustment mode, and sets the current baseline H to Hₜ;
when Hₜ>ΔHᵢ+1, end the temporary adjustment mode and set the current baseline H to Hₜ;
in step (7), when the system enters the next automatic baseline adjustment leveling, continue the cycle from step (4); when the system baseline height is Hₜ, the system enters the final leveling operation state.

10. The leveling method with automatic setting and adjustment of baseline height according to claim 9, **characterized in that**: completion of the final leveling pass: when the percentage of points where the difference between all elevation data and the baseline height in step (2) is within the threshold range is greater than or equal to p compared to the total number of points, the plot leveling is completed.
